# EUROPEAN PATENT APPLICATION

(11) **EP 2 540 678 A1**
(43) Date of publication of application: **02.01.2013**
(21) Application number: 10838395.1
(22) Date of filing: 12.05.2010
(51) Int. Cl.: C02F 9/04, C02F 1/50

(54) **METHOD AND SYSTEM FOR SHIP BALLAST WATER TREATMENT**

(30) Priority: 30.03.2010 CN 201010139146
(71) Applicant: Qingdao Headway Technology Co., Ltd., Shandong 266101 (CN)
(72) Inventor: CAO, Xuelei, Qingdao Schandong 266101 (CN); LIU, Bingyan, Qingdao Schandong 266101 (CN); DU, Qinghua, Qingdao Schandong 266101 (CN); GUO, Zhongsheng, Qingdao Schandong 266101 (CN)
(74) Representative: Chaillot, Geneviève
(86) International application number: PCT/CN2010/072668
(87) International publication number: WO 2011/120250

(57) **Abstract**

The present invention relates to the technical field of environmental protection, especially relating to an efficiently-inactivating and energy-saving method for processing ship ballast water, which comprising the following processes: A) a filtering process, in which ship ballast water is filtered to remove the large grained organisms and solids; and B) a sterilizing process, in which the filtered water flows through a sterilization processing unit to have the organisms and bacteria in the water killed. Correspondingly, the present invention also discloses a system for processing ship ballast water, which has advantages as follows: low energy consumption, high efficiency, convenient installation simple and no pollution after processing.

## Description

### Technical field of the invention

The present invention relates to the technical field of environmental protection, especially relating to an efficiently-inactivating and energy-saving method and system for processing ship ballast water.

### Background of the invention

Currently, one of the four major threats that the marine environment faces is from the invasive spread of harmful organisms, and ship ballast water is the main spreading way that causes the invasive spread of harmful organisms. It is the best way to process the ship ballast water to solve the problem of the invasive spread of harmful organisms.

IMO points that managing the invasive spread of harmful organisms of ship ballast water is a focal issue drawing the global attention, and it is not advocated that different territories adopt different management system to manage the ballast water, of which basic requirements are as follows: on-board treatment, cost effectiveness, small-sized equipment and convenient operation, preventing further pollution to the environment of the marine coastal water, and the processing equipment and operation should be safe and reliable.

Due to the tremendous amount of ship ballast water which needs to be processed in a short period of time, and restricted by the sustainable development of the marine environment and marine economy, the ordinary microorganisms killing methods (or chemicals) cannot meet the requirement to prevent invasion of foreign organisms in ship ballast water. Although some methods are successful and effective in laboratories, they cannot meet the requirements of the marine environment and sustainable development thereof once applied to processing ship ballast water.

The current methods for processing ballast water include: mechanical method, physical method and chemical method. Hereinafter, the above three methods will be simply described, respectively.

1. Mechanical method

The mechanical method comprises such methods as filtering, cyclone separation, offshore replacement, deposition and flotation etc.

In the filtering technology, most developed countries apply membrane treatment and corresponding devices to filter microorganisms, plankton and bacteria, such as Japanese Patent JP2005342626, JP20060099157, JP2006223997, JP2005342626, and International Patent WO 2007114198, each of which employs the membrane technology to filter the bacteria and microorganisms in the seawater and freshwater which is drawn as the ballast water. This technology and corresponding devices require relatively high pressure and consume a great amount of energy. In addition, the membrane is easy to be polluted and blocked. The operation cost is relatively high for water with a large flow rate and a rapid flow speed, thus it is impossible for the processing capacity to meet corresponding requirements.

The cyclone separation technology can remove relatively large grained organisms from the ballast water. However, the method is restricted when the specific gravity of the organisms is close to that of the seawater. The offshore replacement needs to redesign the pipelines and cabins of the current ships, which limits the use and operation of the current ships. Theoretical researches on ballast water treatment have been conducted for the deposition and flotation method, but not yet applicable to ships.

2.Physical method

The physical method mainly comprises such technologies as heating treatment, ray technology, microwave technology, and pressure switch technology etc.

The heating treatment applies the residual heat of the host to kill the microorganisms in the ballast water, which is sanitarily and safely feasible. However, the discharged ballast water may cause environmental problems to public water.

The ray technology comprises ultraviolet technique and γ-ray technique etc. The components of the microorganisms will have chemical reaction under the action of the ray radiation to kill the bacteria. Since water has a very strong absorption function to ultraviolet rays, it restricts the range and ability of ultraviolet sterilization. Generally, the ultraviolet sterilization technology is applied to small-volume water with relatively low processing load and circularly-flowing water. For example, an ultraviolet sterilization system for processing water is disclosed in Chinese Patent Application No. 200510019793.2. American Patent US 2004134861 and US2005211639, International Patent WO2004002895 and W02005110607 propose a device using ultraviolet from multi-group ultraviolet lamps for continuous treatment, respectively. In addition, the sterilization effect can be enhanced by combining ultraviolet irradiation and ultrasonic treatment. For example, Chinese Patent Application No. 200610023241.3 discloses an acousto-optic sterilization device for drinking water treatment, and Chinese Patent Application No. 200510104266.1 discloses a puissant ultraviolet sterilization filter for cultivation seawater treatment. American Patent US5738780 combines the ultraviolet sterilization and direct current electro-catalysis together applied to process the ballast water. However, these technologies are still restricted by the range and ability of ultraviolet sterilization and the sterilization effect is still unsatisfactory for water with high load, high flow rate and large area. Although the ray technology does not arouse controversy with respect to safety, health and environment, it may cause genetic mutation to the processed microorganisms.

The microwave technology comprises various microwave technologies using ultrasonic wave which can cause violent vibration, has cavitation effect and can generate a great amount of micro-jet to result in strong impact to the container wall, and such function is used to ultrasonic cleaning, and also to improve reaction effects. For example, Chinese Patent Application No. 200510117457.1 discloses an ultrasound-based method and device for processing electrolysis effluent, and Chinese Patent Application No. 99120675.4 discloses an ultrasound-based method and device for processing water, which are used to improve the flocculation. For example, Chinese Patent Application No. 200610085548.6 discloses an azo dye effluent processing method, and German Patent DE19919824 discloses an organic tin oxidation technology, which use the ultrasound to promote the chemical reaction. Microcell high-pressure caused by ultrasonic cavitation can be used to break the cells, however, such effect can be achieved in the case that the ultrasound energy is focused in a relatively small area. Thus, the present ultrasound technology and corresponding water treatment device have greater operability to be implemented for a small volume of water and the circulating water also can be used. For example, Chinese Patent Application No. 200610023241.3 discloses an acousto-optic sterilization device for drinking water treatment.

Japanese Patent JP2006007184 provides an ultrasonic transducer (28∼200KHz) to a pipe outer wall, whereby the ballast water through the pipe is sterilized by the ultrasound, and JP2005021814 provides a ballast water pipe algal removal device based on ultrasound, in which an ultrasonic transducer is provided to both side of a tank through which water conduits pass, and microorganism in the water passing through the tank is sterilized by the ultrasound. The two patents do not take damage to the piezoelectric ceramics of the ultrasonic transducer on the pipe wall or tank caused by the ultrasound into consideration, and the damage to the piezoelectric ceramics caused by reflection echo which is perpendicular to the ultrasonic transducer cannot be ignored. Otherwise, the lifetime of the ultrasonic transducer would be directly affected, thus stability and reliability of the device would be reduced. Patent Application No. 98236857.7 discloses an ultrasonic water treatment machine, and International Patent WO03095370 discloses a circular and continuous ultrasonic ballast water treatment device, whose ultrasonic transducers have the same problems. For water with a large flow rate and a rapid flow speed, besides the above problems, it consumes a large amount of energy to independently use ultrasonic processing with high operation cost, which cannot ensure the sterilization effect and does not have operability.

Another sterilization method is to use rapid pressure change. Sterilization and algae killing can break the cells of the bacteria and algae by pressurizing the water to a certain degree. For example, Japanese patent JP2007021287, JP2005270754, and JP2005254138 can also achieve the equivalent effect as the ultrasound by using the pressure change. However, the pressure transducer results in noise to influence the health of the crew and damage to the surface and structure of the water tank.

3. Chemical method

The current chemical method applied to processing the ballast water comprises medicament method, seawater electrolysis, and catalytic oxidation method etc.

Chinese Patent Application No. 02100332.7 discloses an oxidized compound biocide containing bromine - Bromochlorobiphenyls Wei, which can be used in the recycling field of industrial water and sewage of the public places, Chinese Patent Application No. 200510025284.0 propose an efficient aldehydes compound biocide made from glutaraldehyde and quantenary ammonium, Chinese Patent Application No. 200510025395.1 discloses a biocide containing 2-methyl-3(2H)-isothiazolone and dodecyl dimethyl benzyl ammonium chloride which can be used to swage treatment, and International Patent WO03002406 published by WIPO adopts copper anode electrolysis to create copper ion sterilization. The biocide used by the current medicament treatment has high toxicity to the organisms with long residual time, which can be applied to processing bacteria in the cyclic sewage system or cooling water system domestically, but is not applicable to processing large-area eutrophic lake water etc. and ballast water that needs to be discharged.

American Patent US2005016933 uses ClO₂ as biocide, International Patent WO2005061388, American Patent US2004099608 and US2003029811, Japanese Patent JP2007144391, JP2006239556, and JP2006263563 respectively disclose the technology applying filtering and adding ozone as biocide and corresponding devices, which have no secondary pollution and have some advantages in processing water with a low flow rate and sterilizing drinking water. However, the operation cost is high when applying this technology to sterilizing water, such as ballast water with a high flow rate and a large area, and algae therein.

In general, adding biocide has better effect for a small volume of water, but the effect cannot be kept on for a long time, so biocide needs to be added again after 1-2 weeks. For processing large-area eutrophic lake water, the operation cost is high and biocide will cause a secondary pollution etc, if the biocide is to be applied to ballast water treatment, the residue of that need to pass through biotoxicity and toxicology estimation.

The seawater electrolysis method generates chlorine on the anode through seawater electrolysis to further generate high-efficiency disinfecting hypochlorous acid to kill microorganisms and bacteria. At the same time, the hydrogen peroxide generated at the cathode has a strong bactericidal ability.

International Patent WO2006058261 discloses a ballast water treatment method and system using electrolysis to generate hypochlorite, Japanese Patent JP2001000974 discloses a ballast water electrolysis treatment device, Chinese Patent Application No. 200510046991.8discloses a electrolysis treatment system for ship ballast water, and Chinese Patent Application No. 200480027174.1 discloses an electrolysis device of a treating water container, in which the chloride ions and water molecules in the water to be processed are electrolyzed into substances (mainly ClO⁻, OH- and H₂O₂) with a high oxidation activity to perform oxidization, inactivate and kill the cells, RNA and DNA of the bacteria and algae in the water to realize the sterilization and algae killing effect, and continuously disinfect the processed water. Although the seawater electrolysis method has a good sterilization effect, it may produce a carcinogenic substance chloroform after sterilization and cause secondary pollution to the environment. Thus, there is always a considerable controversy about this method.

The catalytic oxidation method is a currently advanced method for processing ballast water. Currently, a ship ballast water treatment system which is finally approval by IMP in the world uses a technology which is a PureBallast water treatment system developed by Sweden Alfa Laval Group, and this system uses the catalytic oxidation method. The core unit in the PureBallast water treatment system is photocatalyst AOT unit taking titanium dioxide as the catalyst which can generate hydroxyl radicals with an extremely high oxidizing ability when irradiated by ultraviolet rays. Besides fluorine, hydroxyl radical is the strongest oxidant, the oxidizing ability of which is 106-109 times as strong as that of hydrogen peroxide and ozone. Under the action of the hydroxyl radicals, the microorganisms can be finally degraded into carbon dioxide and water by chain reaction. However, in practice, the efficiency depends on the crystal structure and surface flaws of the titanium dioxide and is influenced by such external factors as light intensity, temperature and PH value etc.

However, it is a pity that the current technologies basically have disadvantages of high investment of equipment costs, high energy consumption and low organism killing efficiency etc., and cause secondary pollution at the same time.

### Summary of the invention

In order to solve the aforementioned problems, the present invention provides an efficiently-inactivating and energy-saving method for processing ship ballast water and discloses a efficiently-inactivating and energy-saving system for processing ship ballast water based on the above method, which can efficiently kill the microorganisms and bacteria. The ballast water processed by the system satisfies the requirements of the International Convention for the Control and Management of Ships' Ballast Water and Sediments, made by International Maritime Organization (IMO) in 2004.

The present invention is realized by the following technical proposals:

An efficiently-inactivating and energy-saving method for processing ship ballast water, comprising the following processes:

A) a filtering process, in which ship ballast water is filtered to remove the large grained organisms and solids; and

B) a sterilizing process, in which the filtered water flows through a sterilization processing unit to have the organisms and bacteria in the water killed.

The efficiently-inactivating and energy-saving method for processing ship ballast water described above, wherein the filtering for the ballast water in the process A) uses a filter, which is a fully-automatic backwash filter, and realizes the on-line self-clean function without any effect on the processing of the system.

The efficiently-inactivating and energy-saving method for processing ship ballast water described above, wherein the sterilization processing unit generates high-efficiency organism and bacteria biocide on line in the process B), and the biocide at least includes one or more of hydroxyl radical, hypochlorous acid, sodium hypochlorite and hydrogen peroxide.

Correspondingly, a system embodying the above method is realized by the following technical proposals:

An efficiently-inactivating and energy-saving system for processing ship ballast water, wherein the system for processing ship ballast water comprises: a ballast pump 1, a filter 2 for removing the large grained organisms and solids, a sterilization processing unit 3 for killing the organisms and bacteria in the water, a control unit 4, a detection unit 5 including a total oxide detector, a flow rate detection unit 6, a salinity or conductivity detection 7, and a ballast tank 8.

The efficiently-inactivating and energy-saving system for processing ship ballast water described above, wherein the filter 2 adopts the working mode of on-line fully-automatic backwash.

The efficiently-inactivating and energy-saving system for processing ship ballast water described above, wherein the filter cartridge of the filter 2 is a disk, a cylindrical, a conical, a cone-column woven mesh or a wedge filter mesh.

The efficiently-inactivating and energy-saving system for processing ship ballast water described above, wherein the precision of the filter 2 is 10-200 microns.

The efficiently-inactivating and energy-saving system for processing ship ballast water described above, wherein the sterilization processing unit 3 can generate high-efficiency organism and bacteria biocide on line; and the biocide at least includes one or more of hydroxyl radical, hypochlorous acid, sodium hypochlorite and hydrogen peroxide.

The efficiently-inactivating and energy-saving system for processing ship ballast water described above, wherein the concentration of the biocide generated by the sterilization processing unit 3 on line is 0.2-10mg/l.

The efficiently-inactivating and energy-saving system for processing ship ballast water described above, wherein a dimensionally stable anode coated by rare metal or a semiconductor catalytic material is contained in the sterilization processing unit 3.

The efficiently-inactivating and energy-saving system for processing ship ballast water described above, wherein the processing flow rate of the sterilization processing unit 3 is 50 m³/h∼4000 m³/h; when the processing flow rate is 300 m³/h, the current value is 50-3000A and the voltage value is 3-40V;

The efficiently-inactivating and energy-saving system for processing ship ballast water described above, wherein the power source of the sterilization processing unit 3 is a direct current power source, a sinusoidal alternating current power source or a square wave alternating current power source.

The efficiently-inactivating and energy-saving system for processing ship ballast water described above, wherein the system is configured of one or more level of devices.

The efficiently-inactivating and energy-saving system for processing ship ballast water according to the present invention, of which the operational principle is as below: ballast pump 1 transports the ballast water to filter 2 by pipelines, the large grained filth and organisms in the ballast water is killed within the filter 2, then the ballast water flows into the sterilization processing unit 3 within which the organisms and bacteria is killed, and the harmless water satisfying the requirement flows into the ballast tank.

The present invention does not add any chemical material, and consumes less energy, has high efficiency, is convenient to install and is easy to operate. The reaction products have no pollution, and the bioinactivation and sterilization effects meet the requirement of IMO.

### Brief description of the drawings

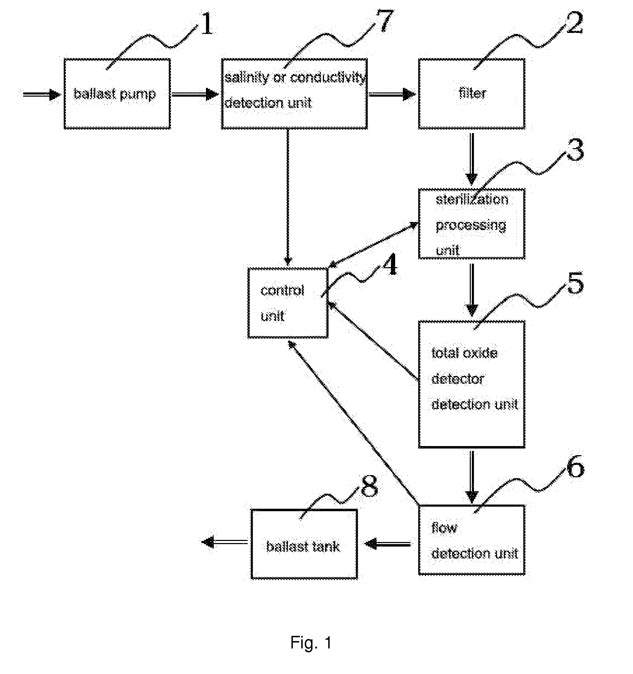

Fig. 1 shows a block diagram of the principle of one embodiment of the system of the present invention.

### Detailed description of the invention

Embodiment 1 is an embodiment of the method according to the present invention, and Embodiment 2 is an embodiment of the system according to the present invention.

Embodiment 1

An efficiently-inactivating and energy-saving method for processing ship ballast water, comprising the following processes:

A) a filtering process, in which ship ballast water is filtered to remove the large grained organisms and solids; and

B) a sterilizing process, in which the filtered water flows through a sterilization processing unit to have the organisms and bacteria in the water killed.

The efficiently-inactivating and energy-saving method for processing ship ballast water described above, wherein the filtering for the ballast water in the process A) uses a filter, which is a fully-automatic backwash filter, and realizes the on-line self-clean function without any effect on the processing of the system.

The efficiently-inactivating and energy-saving method for processing ship ballast water described above, wherein the sterilization processing unit generates high-efficiency organism and bacteria biocide on line in the process B), and the biocide at least includes one or more of hydroxyl radical, hypochlorous acid, sodium hypochlorite and hydrogen peroxide.

Embodiment 2

As shown in Fig. 1, an efficiently-inactivating and energy-saving system for processing ship ballast water, wherein the system for processing ship ballast water comprises: a ballast pump 1, a filter 2 for removing the large grained organisms and solids, a sterilization processing unit 3 for killing the organisms and bacteria in the water, a control unit 4, a detection unit 5 including a total oxide detector, a flow rate detection unit 6, a salinity or conductivity detection 7, and a ballast tank 8. The ballast pump 1 draws seawater from the sea, which pass through the salinity or conductivity detection 7, the filter 2 for removing the large grained organisms and solids, the sterilization processing unit 3 for killing the organisms and bacteria in the water, the detection unit 5 including a total oxide detector, the flow rate detection unit 6, and the ballast tank 8 etc, and finally flows into the sea. The control unit 4 is used to receive/send processed signals from/to each of the above elements centrally.

The efficiently-inactivating and energy-saving system for processing ship ballast water described above, wherein the filter 2 adopts the working mode of on-line fully-automatic backwash.

The efficiently-inactivating and energy-saving system for processing ship ballast water described above, wherein the filter cartridge of the filter 2 is a disk, a cylindrical, a conical, a cone-column woven mesh or a wedge filter mesh.

The efficiently-inactivating and energy-saving system for processing ship ballast water described above, wherein the precision of the filter 2 is 10-200 microns.

The efficiently-inactivating and energy-saving system for processing ship ballast water described above, wherein the sterilization processing unit 3 can generate high-efficiency organism and bacteria biocide on line; and the biocide at least includes one or more of hydroxyl radical, hypochlorous acid, sodium hypochlorite and hydrogen peroxide.

The efficiently-inactivating and energy-saving system for processing ship ballast water described above, wherein the concentration of the biocide generated by the sterilization processing unit 3 on line is 0.2-10mg/l.

The efficiently-inactivating and energy-saving system for processing ship ballast water described above, wherein a dimensionally stable anode coated by rare metal or a semiconductor catalytic material is contained in the sterilization processing unit 3.

The efficiently-inactivating and energy-saving system for processing ship ballast water described above, wherein the processing flow rate of the sterilization processing unit 3 is 50 m³/h∼4000 m³/h. When the processing flow rate is 300 m³/h, the current value is 50-3000A and the voltage value is 3-40V;

The efficiently-inactivating and energy-saving system for processing ship ballast water described above, wherein the power source of the sterilization processing unit 3 is a direct current power source, a sinusoidal alternating current power source or a square wave alternating current power source.

The efficiently-inactivating and energy-saving system for processing ship ballast water described above, wherein the system is configured of one or more level of devices.

In the water treatment system according to the present invention, in order to prevent the large organisms or impurity entering to the system to form depositions at the ballast tank, and to improve the efficiency of the sterilization processing unit, a fully-automatic backwash filter whose precision is 10-200 microns is provided in front of the sterilization processing unit to remove the large organisms and other impurity. This filter will automatically start the backwash after the pressure loss exceeds a predetermined value, and the filtering and backwash are performed at the same time with no need for a worker to operate on site. The filter works when the ship is ballasted, and does not work when the ship is unballasted.

The system also uses a sterilization processing unit. The sterilization processing unit is a core element of the system, which uses a high performance semiconductor catalysis material which generates a large amount of hydroxyl group etc active material and high current efficiency, and has a longer lifetime. This unit can remove all the organisms in the ballast water.

The system control unit of the system has the responsibility to control the whole system, comprising acquisition and processing of all kinds of monitoring sensing signals, acquisition and processing of alarm signals, and automatic control of system startup and shutdown sequence, and the system control unit contains the control programs which are necessary for the system to work. The work status of the management system can be displayed, including the work status of each of the section configuring the system, and the sensors detects the data and status in real time. When the apparatus gives the acousto-optic alarms, the power is automatically cut off to stop the work of the system. The work status of the apparatus would be recorded and stored, and would be displayed and printed in the form of a normal check requirement. The operator may control and adjust the system by the control unit. The control unit has a remote communication Interface. The remote control, remote display and remote alarm can be realized by the interface and a remote unit. And the control unit also has alarm output interface, which can realize the integration with other signals of the control room, thereby it can ensure that the alarm can be detected at any position of the engine room. The control unit collects various monitoring sensing signals, including the opening/closing status of each valve, and the system sensing signals of the salimeter, flowmeter, current value of the power source, voltage value, and total oxide detector (TRO) value etc, and the navigation data. The computing system calculates the current value, voltage value by the inside programs based on the each parameters collected to adjust the work of the system to its optimal running status. The system would always work on its optimal running status. The control unit has recording and storing system, which records and stores the system running data for more than 24 months.

The system also uses sensors to monitors and detects the parameters, such as conductivity or salinity, flow rate, and total oxide detector (TRO) value etc, and reflects the system status in time and accurately, such that the control system to be adjusted to a ideal processing effect. The conductivity or salinity and flow rate are important parameters of the control unit programs. The control unit can cause sterilization processing unit into a correspondingly initial running mode by invoking the inside stored programs.

The system uses a C, which is a power distribution device. The power of the filter, sterilization processing unit, control unit and each sensor is distributed from the power distribution device.

The water treatment according to the invention can be simply operated and maintained, realize the automatic control, and have a friendly man-machine interface with simple operation. The interior of the system is a modular design of units. The flow rate of unit processing is 50 m³/h ∼ 4000m³/h. The system can be flexibly and conveniently installed on small-tonnage ships. By means of a single group of units or multiple parallel groups of units can be adapted to large-tonnage ships to flexibly install the system without taking much room. This system is also applicable to old ships with narrow space.

The whole system is sealed structure, so there is no possibility that chemical and noise harm is caused to the staff around. The system can generate active substances on line for inactivation and sterilization of organisms without adding and storing any chemicals, which is economical and poses no threat to the personnel on board. Thus, the system is safe, reliable, economic, and practical. The active substances generated by this system have a low concentration with a high release velocity and do not influence the surrounding environment after being discharged. In additional, the operation energy consumption is low to satisfy the requirement of "energy-saving and environmental protection".

Experiments have been conducted on ballast water processing by using the system of the present invention, see table 1 and table 2:

**Table 1.**

| Organism type | Unit | Inflow | No water treatment | The fifth day of water treatment | IMO requirements | California requirements |
|---|---|---|---|---|---|---|
| >50 µm | cell/m³ | 213304 | 0 | 0 | <10 | 0 |
| >10-50 µm | cell/I | 2.023 x10⁶ | 0 | 0 | <10⁴ | <10 |
| Escherich ia coli | cfu/100ml | 2200 | <1 | <1 | <250 | <126 |
| Enterococ cus | cfu/100ml | 91 | <1 | <1 | <100 | <33 |

**Table 2.**

| Organism type | Unit | Inflow | No water treatment | The fifth day of water treatment | IMO requireme nts | California requireme nts |
|---|---|---|---|---|---|---|
| >50 µm | cell/m³ | 3214 | 0 | 0 | <10 | 0 |
| >10-50 µm | cell/I | 3.22x10⁵ | 5.7 | 0.7 | <10⁴ | <10 |
| Escherichi a coli | cfu/100ml | 230 | <1 | <1 | <250 | <126 |
| Enterococ cus | cfu/100ml | 42.3 | <1 | <1 | <100 | <33 |

It can be referred from the two tables above that the water processing capability of the system can fully satisfy the ship ballast water processing requirements of IMO and California.

The present invention does not add any chemical material, and consumes less energy, has high efficiency, is convenient to install and is easy to operate. The reaction products have no pollution, and the bioinactivation and sterilization effects are pretty good.

This article describes the exemplary embodiments and the current preferred embodiments of the present invention. It should be understood that the concept of the present invention can be implemented and applied in various forms which are similarly intended to fall within the scope of protection of the present invention.

## Claims

1. An efficiently-inactivating and energy-saving method for processing ship ballast water, comprising the following processes:
A) a filtering process, in which ship ballast water is filtered to remove the large grained organisms and solids; and
B) a sterilizing process, in which the filtered water flows through a sterilization processing unit to have the organisms and bacteria in the water killed.

2. The efficiently-inactivating and energy-saving method for processing ship ballast water according to claim 1, wherein the filtering for the ballast water in the process A) uses a filter, which is a fully-automatic backwash filter, and realizes the on-line self-clean function without any effect on the processing of the system.

3. The efficiently-inactivating and energy-saving method for processing ship ballast water according to claim 1, wherein the sterilization processing unit generates high-efficiency organism and bacteria biocide on line in the process B), and the biocide at least includes one or more of hydroxyl radical, hypochlorous acid, sodium hypochlorite and hydrogen peroxide.

4. An new efficiently-inactivating and energy-saving system for processing ship ballast water, wherein the system for processing ship ballast water comprises: a ballast pump (1), a filter (2) for removing the large grained organisms and solids, a sterilization processing unit (3) for killing the organisms and bacteria in the water, a control unit (4), a detection unit (5) including a total oxide detector, a flow rate detection unit (6), a salinity or conductivity detection (7), and a ballast tank (8).

5. The efficiently-inactivating and energy-saving system for processing ship ballast water according to claim 4, wherein the filter (2) adopts the working mode of on-line fully-automatic backwash.

6. The efficiently-inactivating and energy-saving system for processing ship ballast water according to claim 5, wherein the filter cartridge of the filter (2) is a disk, a cylindrical, a conical, a cone-column woven mesh or a wedge filter mesh; and the precision of the filter (2) is 10-200 microns.

7. The efficiently-inactivating and energy-saving system for processing ship ballast water according to claim 4, wherein the sterilization processing unit (3) can generate high-efficiency organism and bacteria biocide on line; and the biocide at least includes one or more of hydroxyl radical, hypochlorous acid, sodium hypochlorite and hydrogen peroxide.

8. The efficiently-inactivating and energy-saving system for processing ship ballast water according to claim 7, wherein the concentration of the biocide generated by the sterilization processing unit (3) on line is 0.2-10mg/l.

9. The efficiently-inactivating and energy-saving system for processing ship ballast water according to claim 7, wherein a dimensionally stable anode coated by rare metal or a semiconductor catalytic material is contained in the sterilization processing unit (3).

10. The efficiently-inactivating and energy-saving system for processing ship ballast water according to claim 7, wherein the processing flow rate of the sterilization processing unit (3) is 50 m³/h∼4000 m³/h; when the processing flow rate is 300 m³/h, the current value is 50-3000A and the voltage value is 3-40V; and the power source of the sterilization processing unit (3) is a direct current power source, a sinusoidal alternating current power source or a square wave alternating current power source.
